# EUROPEAN PATENT SPECIFICATION

(11) **EP 2 059 555 B1**
(45) Date of publication and mention of the grant of the patent: **04.04.2012**
(21) Application number: 06792976.0
(22) Date of filing: 23.08.2006
(51) Int. Cl.: C08J 7/12, B05D 3/14, B29C 59/14, C08J 5/04

(54) **METHOD FOR PRE-TREATING FIBRE REINFORCED COMPOSITE PLASTIC MATERIALS PRIOR TO PAINTING AND METHOD FOR APPLYING A PAINTING LAYER ON FIBRE REINFORCED COMPOSITE PLASTIC MATERIALS**
VERFAHREN ZUR VORBEHANDLUNG VON FASERVERSTÄRKTEN KUNSTSTOFFVERBUNDWERKSTOFFEN VOR DEM ANSTREICHEN UND VERFAHREN ZUM AUFBRINGEN EINER ANSTRICHSCHICHT AUF FASERVERSTÄRKTE KUNSTSTOFFVERBUNDWERKSTOFFE
MÉTHODE DE PRÉTRAITEMENT AVANT PEINTURE DE MATÉRIAUX PLASTIQUES COMPOSITES RENFORCÉS DE FIBRES ET MÉTHODES D'APPLICATION D'UNE COUCHE DE PEINTURE SUR DES MATÉRIAUX PLASTIQUES COMPOSITES RENFORCÉS DE FIBRES

(43) Date of publication of application: 20.05.2009
(73) Proprietor: Europlasma Nv, 9700 Oudenaarde (BE)
(72) Inventor: LEGEIN, Filip, B-3140 Keerbergen (BE); LIPPENS, Paul, B-8790 Waregem (BE); PAUWELS, Marc, B-2950 Kapellen (BE); VANLANDEGHEM, Anthony, B-9700 Oudenaarde (BE)
(74) Representative: Ostyn, Frans
(86) International application number: PCT/EP2006/065609
(87) International publication number: WO 2008/022652

(56) References cited:
- EP-A2- 0 127 149
- WO-A-2006/029642
- GB-A- 2 053 026
- JP-A- 56 082 826
- US-A- 5 348 632

## Description

The invention relates to a method for pre-treating fibre reinforced composite plastic materials prior to painting. The invention relates also to a method for applying a painting layer on a fibre reinforced composite plastic material.

Concerning the improvement of surface properties in order to make them more susceptible for coating treatment or to impart improved adhesion characteristics thereto, different methods are already known.

A first method is to apply a primer by means of a spray gun onto the fibre reinforced composite plastic material before applying a painting layer.

A major disadvantage of this method is that spray guns for applying these primers are subjected to considerable wear and special air filters are required for containing overspray. All these elements create considerable maintenance costs for the solution using a primer. Furthermore, although there a few cases of base material / lacquer system combinations where some adhesion test can be passed with fairly good results using a special primer, such primers are however extremely expensive. The amount of primer varies depending on the type of applicator system and depending on part size, e.g. from 1 - 2 grams per part to 6 - 8 grams per part. For a production of 4000 parts per hour during 20 hours per day, a primer cost of 2,800 to 20,000 Euro per day is typically true. Finally, primers in those cases sometimes give marginal adhesion results, yield non stable results and are difficult to apply.

Other methods that are used are flame treatment and Corona treatment. The disadvantage of flame treatment is that a flame needs to be piloted over every single surface area of every part, which is a cumbersome and lengthy process. The disadvantage of Corona treatment is that this is a two-dimensional technology only.

Still other methods are described in different patent applications.

In GB 2053026, a method is known for improving the properties of an organic or inorganic substrate. The method comprises the steps of providing a solid substrate, elevating the temperature of the substrate to at least 40 °C, and subjecting the substrate to a cold plasma, and if desired, coating the substrate with a coating material after the substrate has been heated.

However, this method first of all is for improving the properties of organic or inorganic substrates, and not for the improving of properties of fibre reinforced composite plastic materials. Second of all, an extra heating step is necessary, through which the method is more cost expensive.

In EP 0127149, a method is described for improving the surface properties, e.g. hydrophilicity, susceptibility to adhesion, printability, etc of thermoplastic resin article. This method comprises subjecting the surface of the thermoplastic resin to a vacuum plasma treatment while the resin is kept at a temperature equal to or higher than the melting or softening point of the resin. Further, the thermoplastic resin in the form of a sheet or film after the vacuum plasma treatment is subsequently laminated with another material of a different kind to prepare a laminated material, which has an unexpectedly high adhesive bonding strength between layers.

The disadvantage of this method is that the thermoplastic resin article is kept at a temperature equal to or higher than the melting or softening point of the resin. This is more costly, brings the risk of deformation of complex parts, complex structures, etc.

In US 0679680, a process is described for modifying of at least one surface of an article or substrate produced from a polymeric material (e.g. to provide wettability, to enhance paint adhesion) comprising exposing said surface to be modified to a low temperature plasma gas composition in a chamber containing the article or substrate, wherein said gas composition consists essentially of a mixture of from 40 to 80 mol% N₂O with 20 to 60 mol% CO₂ for a time sufficient to modify said surface.

In US 5348632, a method of plasma treating a surface of a workpiece is described in order to increase at least the adherence of lacquer on a workpiece surface consisting of at least substantially one synthetic, organic polymer. The workpiece is plasma treated in an environment of reactive gas, the treatment duration is selected at least close to an adherence maximum in a lacquer adherence- / gas pressure diagram.

However, both methods describe the treatment of other materials than fibre reinforced composite plastic materials. Composite plastic materials contain a least one non-polymeric fraction in substantial concentration (e.g. min. 10 wt %, in practice at least 30 wt %) which forms the reinforcement. In US 5348632 for instance, the method is more specifically for large automotive parts (= 1 m) of polypropylene (e.g. car bodies) or other polyolefines or plain organic polymers.

Also, WO2006/029642 relates to a method for improving the electrical properties of the surface of a polymer composite comprising a filler (sintered carbon or graphite) by plasma treatment. However, no fibres reinforced composites are involved, while a preheating step is necessary. There is no indication of pretreatment prior to painting by a qualitative, easy and cost effective manner.

Such fibre reinforced composite materials are more and more used in the field of housings of mobile phones and other personal digital assistants (PDA's). In the past, these products were made mainly from plastics such as polycarbonate (PC), acrylonitrile-butadiene-styrene (ABS) and blends of both polymers (PC/ABS). Since many years, already part of or the entire surface of such housings has been painted (lacquered) using spray painting. The paint layer usually consists of an opaque base coat covered by a hard, clear transparent top coat.

Recently, there has been a general trend of replacing PC, ABS or the blend PC/ABS by fibre reinforced composite plastics such as polyamides. A typical example is glass fibre reinforce nylon 12. Up to 55% glass fibre is being used in such composite plastics. Composite plastics combine strength with elasticity / ductility in a perfect way. Moreover, they are chosen for their moulding properties. Finally, and because most mobile phones today have a built in antenna, the choice of the matrix polymer is determined by performance criteria for the antenna (shielding characteristics of the plastic housing).

Painting of such composite plastics is however extremely difficult. Whereas PC/ABS can easily be painted even without the usage of primers, almost all composite plastics show no adhesion at all when painted directly. For most of the fibre reinforced commercial composite plastics available today, there exist no primers or other adhesion promoters which increase adhesion to acceptable levels. For those limited cases where such primers do exist, the cost of this extra coating layer between base coat and plastic is either prohibitive or the visual aspect of the painted part after applying all coating layers is unacceptable. Also, more conventional pre-treatment technologies such as flaming or Corona-treatment, do not apply because they do not lead to a sufficiently high surface energy so as to guarantee good adhesion results.

Also the introduction in the mobile phone and PDA industry of housings with increased three-dimensionality, i.e. more complex geometries for the parts which is possible due to the introduction of such composite plastic materials, and which enables the production of housings and related final products with a greater attractiveness, makes the painting problem worse. Indeed, for complex three-dimensional parts, it is more difficult to maintain a certain coating thickness all over the part surface which influences coating wear behaviour.

The purpose of the invention is on the one hand to provide a method for pre-treating fibre reinforce composite plastic material prior to painting, wherein this kind of material can be painted in a qualitative, easy and cost effective manner.

This purpose of the invention is attained by providing a method for pre-treating fibre reinforced composite plastic materials prior to painting, wherein the materials are subjected to a low pressure cold vacuum gas plasma treatment without preheating the materials, having a pressure of between 6 Pa and 200 Pa and a temperature of between room temperature and 100 °C.

This method has different advantages, i.e.
- The adhesion problems between most of the fibre reinforced composite plastic materials and the majority of available lacquer systems are solved, without the use of a primer
- This method represents important cost saving for amongst others producers of housings of mobile phones and other personal digital assistants (PDA's). Almost 100% yield leads to improved quality and reduced scrap costs for all productions.
- Vacuum plasma pre-treatment does neither generate waste waters nor solid waste. The tiny amounts of exhaust gases are, for almost all plasma processes, completely environmentally friendly because the mainly consist of ambient air constituents such as O₂, H₂, Ar, N₂, CO₂ and H₂O. In those limited cases where more aggressive gases are used, they can be contained by a dry or wet scrubber on the exhaust line.
- Vacuum plasma technology is a true three-dimensional technology. Any surface area of the substrates which is subject to the treatment gas will be effectively pre-treated. Large numbers of parts can be uniformly treated at the same time in the same batch. This in contrast to flaming operations and Corona treatment as described above in the state of the art.
- The equivalent variable cost of vacuum plasma technology in comparison with the use of a primer as described in the state of the art above, are only around 5 - 6 Euro per day.

In a preferred embodiment of a method according to the invention, the surface energy levels are increased from 20 - 36 mN/m to minimum 50, and preferably to 72 mN/m after the plasma treatment.

In an advantageous method according to the invention, a low pressure cold vacuum gas plasma is used having a pressure preferably at approximately 20 Pa.

In a preferred embodiment of a method according to the invention, a low pressure cold vacuum gas plasma is used having a temperature preferably at room temperature.

The process gas used in the plasma pre-treatment method can be oxygen, forming gas consisting of N₂ with 5 - 20 vol % of H₂, a mixture of Ar and H₂ , dry air or O₂ with 0.05 - 20 vol. % of CF₄.

The fibre-reinforced composite plastic material can be a fibre reinforced polyamide, a fibre reinforced polyester, a fibre reinforced biodegradable plastic or a fibre reinforced polyphenylenesulfide, the fibre-reinforcement preferably consisting of at most 75 weight % of fibres. Preferably, the fibre-reinforcement consist of a glass fibre reinforcement.

In a preferred method according to the invention, a low pressure cold vacuum gas plasma is used having a frequency of between 1 kHz and 5 GHz.

On the other hand, the purpose of the invention is to provide a method for applying a painting layer on a fibre reinforced composite plastic material, wherein the painting layer can be applied in an easy, qualitative and cost-effective way onto the fibre reinforced composite plastic material.

This purpose of the invention is attained by providing a method for applying a painting layer on a fibre reinforced composite plastic material, the method comprising the steps of pre-treating the material using a method according to the invention, and subsequently applying the painting layer to the pre-treated material.

There exist certain base coat systems for which it is difficult to achieve adhesion, even for composite fibre reinforced plastic materials with low moisture absorption. In such case, the addition of a hardener to the one component base coat makes it possible to reach perfect adhesion. So, the addition of a hardener makes the selection of the basecoat less critical.

In an advantageous method according to the invention, the painting layer comprises at most 30 weight % of hardener.

Further distinctive features and characteristics will be clarified in the following description and the therein mentioned examples. It should be noted that this description and the examples are only given for clarification of the invention and imply no restriction in the general scope of the invention as that appears from the abovementioned description and from the claims at the end of this text.

It has been found that, by using low pressure cold vacuum gas plasma, having a temperature of between room temperature and 100 °C, preferably room temperature, and a pressure of between 6 Pa and 200 Pa, preferably approximately 20 Pa, as a pre-treatment step prior to painting of fibre reinforced composite plastic materials (for instance injection moulded parts made of a fibre reinforced composite plastic material), and without pre-heating these materials, excellent adhesion characteristics between the paint and the fibre reinforced plastic materials can be achieved without using a primer. The surface energy levels are therewith increased from 20 - 36 mN/m to minimum 50 mN/m and preferably to 72 mN/m immediately after the plasma treatment.

For most composite fibre reinforced plastic materials, the low pressure cold vacuum plasma treatment as such is enough to guarantee fulfilment of all adhesion criteria imposed by for instance mobile phone manufacturers. For some composite fibre reinforced plastic materials, mainly those with higher water absorption characteristics (those absorbing more than 1 wt.% of water after 2 days in a climate chamber), the combination of a low pressure cold vacuum plasma treatment with a one component base coat in which 10 % hardener has been added fulfils all specifications.

The process gas used in the plasma pre-treatment method can be oxygen, forming gas consisting of N₂ with 5 - 20 vol % of H₂, a mixture of Ar and H₂ ,dry air or O₂ with 0.05 - 20 vol. % of CF₄. A low pressure cold vacuum gas plasma is used having a frequency of between 1 kHz and 5 GHz.

Further characteristics of the plasma pre-treatment process are:
- use of large area planar electrodes (perforated plates or wire grid electrodes);
- dwell time of minimum 2 min with typical dwell times between 5' and 15' depending on the substrate to be treated.

When applying a painting layer on a fibre reinforced composite plastic material, first the material is pre-treated by means of the above-mentioned method, and is subsequently painted, for instance by means of a spraying gun or by dipping.

The fibre reinforced composite plastic material preferably consists of a fibre reinforced polyamide, polyester, biodegradable plastic, polyphenylenesulfide, the fibre-reinforcement being at most 75 weight % of glass fibres. However, also other fibre-reinforcement can be used such as carbon fibres, cellulose fibres, etc.

### Examples

1. Heat stabilized polyamides with up to 55 wt% glass fibres, such as heat stabilized polyamide 12 with 50% glass fibres. Typical example: Grilamid LV-5H from EMS or Rilsan ® PA 12 (50% glass fibres) from Arkema.
2. Semi-crystalline polyamides with aromatic co-polyamides, reinforced with up to 55% glass fibres such as Grivory GV-5H from EMS (50% glass fibres) or Zytel 53G50 LR from DuPont (50% glass fibres)
3. Polyarylamides reinforced with up to 55% glass fibres such as Ixef1022 (50% glass fibres), Ixef1622 (50% glass fibres) or Ixef2060 (55% glass fibres), all materials are from Solvay.
4. Poly-butylene-terephtalate, glass fibre reinforced, glass fibre reinforced up to 55% such as Crastin PBT from DuPont.
5. Green polyamides, glass fibre reinforced, such as Rilsan® PA11 with 30% glass fibres from Arkema (produced from castor beans).
6. Bio-degradable plastics such as those made from poly-lactic acid such as carbon fibre reinforced Terramac® TE-8310P from Unitika Tsusho.
7. Poly-phenylenesulfide plastics, glass fibre reinforced such as Techtron PPS from Quadrant EPP or Fortron PPS or Ryton® PPS from Chevron Philips Chemical Cy LLC.
8. Poly-phtalamides, glass fibre reinforced such as Verton ® PDX-U-03320 from LNP Engineering Plastics Inc.

The adhesion tests which are typically carried out and which are passed by the low pressure cold vacuum gas plasma pre-treated painted materials are:
- Dry adhesion test, consisting of
   - A multiblade cross hatch test according to EN ISO 2409 (or ASTM D 3359). The test is carried out after minimum 4 hours of applying the paint. Such test is often repeated 6 - 8 days after the paint application.
   - A single blade cross cut test, carried out 6 - 8 days after paint application.
- Multiblade cross hatch adhesion test after a damp heat cyclic conditioning (IEC 60068-2-30/60068-3-4). Damp heat cycle starts 1 day after the paint application. Total duration of conditioning in climate chamber 6 days with a temperature cycling between 25°C and 55°C and a relative humidity constantly between 95 and 100%.
- Multiblade cross hatch adhesion test after a QUV-conditioning (ASTM G 154-00ae1): conditioning during 96 hours (12 cycles of 8 hours each, each cycle consisting of 4 hours UV-A-light exposure (340 nm/60°C) and 4 hours moisture exposure (50°C / 100% RH).
- Vibratory wear test (Rösler® Through Vibrator with Rösler® wear particles: 75% RKF 10Kand 25% RKK 15P, detergent FC120).

There are basically two painting systems used, i.e.
- a classical coating system consisting of a base coat (metallic or opaque non-metallic) and a clear transparent top coat;
- a clear, transparent top coat, being a soft feel lacquer also consisting of a base coat and a soft feel top coat.

## Claims

1. Method for pre-treating fibre reinforced composite plastic materials prior to painting, **characterised in that** the materials are subjected to a low pressure cold vacuum gas plasma treatment without preheating the materials, having a pressure of between 6 Pa and 200 Pa and a temperature of between room temperature and 100 °C.

2. Method according to claim 1, **characterised in that** the surface energy levels are increased from 20 - 36 mN/m to minimum 50, and preferably to 72 mN/m after the plasma treatment.

3. Method according to claim 1 or 2, **characterised in that** said pressure is preferably at approximately 20 Pa.

4. Method according to any one of claims 1 to 3, **characterised in that** said temperature is preferably at room temperature.

5. Method according to any one of claims 1 to 4, **characterised in that** the process gas used in the plasma pre-treatment method is oxygen.

6. Method according to any one of claims 1 to 4, **characterised in that** the process gas used in the plasma pre-treatment method is forming gas consisting of N₂ with 5 - 20 vol % of H₂.

7. Method according to any one of claims 1 to 4, **characterised in that** the process gas used in the plasma pre-treatment method is a mixture of Ar and H₂.

8. Method according to any one of claims 1 to 4, **characterised in that** the process gas used in the plasma pre-treatment method is dry air.

9. Method according to any one of claims 1 to 4, **characterised in that** the process gas used in the plasma pre-treatment method is O₂ with 0.05 - 20 vol. % of CF₄.

10. Method according to any one of claims 1 to 9, **characterised in that** the fibre-reinforced composite plastic material is a fibre reinforced polyamide.

11. Method according to any one of claims 1 to 9, **characterised in that** the fibre-reinforced composite plastic material is a fibre reinforced polyester.

12. Method according to any one of claims 1 to 9, **characterised in that** the fibre-reinforced composite plastic material is a fibre reinforced biodegradable plastic.

13. Method according to any one of claims 1 to 9, **characterised in that** the fibre-reinforced composite plastic material is a fibre reinforced polyphenylenesulfide.

14. Method according to any one of claims 10 to 13, **characterised in that** the fibre-reinforcement consist of at most 75 weight % of fibres.

15. Method according to any one of claims 10 to 14, **characterised in that** the fibre-reinforcement consist of a glass fibre reinforcement.

16. Method according to any one of the preceding claims, **characterised in that** a low pressure cold vacuum gas plasma is used having a frequency of between 1 kHz and 5 GHz.

17. Method for applying a painting layer on a fibre reinforced composite plastic material, **characterised in that** the method comprises the steps of pre-treating the material using a method according to any one of the preceding claims, and subsequently applying the painting layer to the pre-treated material.

18. Method according to claim 17, **characterised in that** painting layer comprises at most 30 weight % of hardener.

## Patentansprüche

1. Verfahren zur Vorbehandlung von faserverstärkten Verbundmaterialien aus Kunststoff vor dem Lackieren, **dadurch gekennzeichnet, dass** die Materialien einer Niederdruck-Kaltvakuum-Gasplasmabehandlung ohne Vorerwärmung der Materialen unterzogen werden, die einen Druck von zwischen 6 Pa und 200 Pa und eine Temperatur von zwischen Raumtemperatur und 100 °C aufweist.

2. Verfahren nach Anspruch 1, **dadurch gekennzeichnet, dass** die Oberflächenenergieniveaus nach der Plasmabehandlung von 20 - 36 mN/m auf mindestens 50 und vorzugsweise auf 72 mN/m erhöht werden.

3. Verfahren nach Anspruch 1 oder 2, **dadurch gekennzeichnet, dass** der Druck vorzugsweise bei ungefähr 20 Pa liegt.

4. Verfahren nach einem der Ansprüche 1 bis 3, **dadurch gekennzeichnet, dass** die Temperatur vorzugsweise bei Raumtemperatur liegt.

5. Verfahren nach einem der Ansprüche 1 bis 4, **dadurch gekennzeichnet, dass** das Prozessgas, das im Verfahren der Plasmavorbehandlung verwendet wird, Sauerstoff ist.

6. Verfahren nach einem der Ansprüche 1 bis 4, **dadurch gekennzeichnet, dass** das Prozessgas, das im Verfahren der Plasmavorbehandlung verwendet wird, Gas bildet, das aus N₂ mit 5 - 20 % Vol. H₂ besteht.

7. Verfahren nach einem der Ansprüche 1 bis 4, **dadurch gekennzeichnet, dass** das Prozessgas, das im Verfahren der Plasmavorbehandlung verwendet wird, eine Mischung aus Ar und H₂ ist.

8. Verfahren nach einem der Ansprüche 1 bis 4, **dadurch gekennzeichnet, dass** das Prozessgas, das im Verfahren der Plasmavorbehandlung verwendet wird, trockene Luft ist.

9. Verfahren nach einem der Ansprüche 1 bis 4, **dadurch gekennzeichnet, dass** das Prozessgas, das im Verfahren der Plasmavorbehandlung verwendet wird, O₂ mit 0,05 - 20 % Vol. CF₄ ist.

10. Verfahren nach einem der Ansprüche 1 bis 9, **dadurch gekennzeichnet, dass** das faserverstärkte Verbundmaterial aus Kunststoff ein faserverstärktes Polyamid ist.

11. Verfahren nach einem der Ansprüche 1 bis 9, **dadurch gekennzeichnet, dass** das faserverstärkte Verbundmaterial aus Kunststoff ein faserverstärktes Polyester ist.

12. Verfahren nach einem der Ansprüche 1 bis 9, **dadurch gekennzeichnet, dass** das faserverstärkte Verbundmaterial aus Kunststoff ein faserverstärkter biologisch abbaubarer Kunststoff ist.

13. Verfahren nach einem der Ansprüche 1 bis 9, **dadurch gekennzeichnet, dass** das faserverstärkte Verbundmaterial aus Kunststoff ein faserverstärktes Polyphenylensulfid ist.

14. Verfahren nach einem der Ansprüche 10 bis 13, **dadurch gekennzeichnet, dass** die Faserverstärkung zu höchstens 75 Gew.% aus Fasern besteht.

15. Verfahren nach einem der Ansprüche 10 bis 14, **dadurch gekennzeichnet, dass** die Faserverstärkung aus einer Glasfaserverstärkung besteht.

16. Verfahren nach einem der vorhergehenden Ansprüche, **dadurch gekennzeichnet, dass** ein Niederdruck-Kaltvakuum-Gasplasma verwendet wird, das eine Frequenz zwischen 1 kHz und 5 Ghz aufweist.

17. Verfahren zur Aufbringung einer Lackierungsschicht auf ein faserverstärktes Verbundmaterial aus Kunststoff, **dadurch gekennzeichnet, dass** das Verfahren die Schritte des Vorbehandelns des Materials unter Verwendung eines Verfahrens gemäß einem der vorhergehenden Ansprüche umfasst, und folglich des Aufbringens der Lackierungsschicht auf das vorbehandelte Material.

18. Verfahren nach Anspruch 17, **dadurch gekennzeichnet, dass** die Lackierungsschicht höchstens 30 Gew.% Härtungsmittel umfasst.

## Revendications

1. Procédé pour prétraiter des matériaux plastiques composites renforcés par des fibres avant de peindre, **caractérisé en ce que** les matériaux sont soumis à un traitement au gaz plasma froid sous vide à basse pression sans préchauffer les matériaux, possédant une pression entre 6 Pa et 200 Pa et une température entre la température ambiante et 100°C.

2. Procédé selon la revendication 1, **caractérisé en ce que** les niveaux d'énergie de surface sont augmentés de 20 à 36 mN/m jusqu'à 50 au minimum, et de préférence jusqu'à 72 mN/m après le traitement au plasma.

3. Procédé selon la revendication 1 ou 2, **caractérisé en ce que** ladite pression est de préférence à approximativement 20 Pa.

4. Procédé selon une quelconque des revendications 1 à 3, **caractérisé en ce que** ladite température est de préférence à température ambiante.

5. Procédé selon une quelconque des revendications 1 à 4, **caractérisé en ce que** le gaz de traitement utilisé dans le procédé de prétraitement au plasma est de l'oxygène.

6. Procédé selon une quelconque des revendications 1 à 4, **caractérisé en ce que** le gaz de traitement utilisé dans le procédé de prétraitement au plasma est un mélange hydrogène-azote constitué de N₂ avec 5 à 20% en volume de H₂.

7. Procédé selon une quelconque des revendications 1 à 4, **caractérisé en ce que** le gaz de traitement utilisé dans le procédé de prétraitement au plasma est un mélange d'Ar et de H₂.

8. Procédé selon une quelconque des revendications 1 à 4, **caractérisé en ce que** le gaz de traitement utilisé dans le procédé de prétraitement au plasma est de l'air sec.

9. Procédé selon une quelconque des revendications 1 à 4, **caractérisé en ce que** le gaz de traitement utilisé dans le procédé de prétraitement au plasma est l'O₂ avec 0,05 à 20% en volume de CF₄.

10. Procédé selon une quelconque des revendications 1 à 9, **caractérisé en ce que** le matériau plastique composite renforcé par des fibres est un polyamide renforcé par des fibres.

11. Procédé selon une quelconque des revendications 1 à 9, **caractérisé en ce que** le matériau plastique composite renforcé par des fibres est un polyester renforcé par des fibres.

12. Procédé selon une quelconque des revendications 1 à 9, **caractérisé en ce que** le matériau plastique composite renforcé par des fibres est un plastique biodégradable renforcé par des fibres.

13. Procédé selon une quelconque des revendications 1 à 9, **caractérisé en ce que** le matériau plastique composite renforcé par des fibres est un polyphénylène sulfide renforcé par des fibres.

14. Procédé selon une quelconque des revendications 10 à 13, **caractérisé en ce que** le renforcement par des fibres est constitué d'au plus 75% en poids de fibres.

15. Procédé selon une quelconque des revendications 10 à 14, **caractérisé en ce que** le renforcement par des fibres est constitué d'un renforcement par des fibres de verre.

16. Procédé selon une quelconque des revendications précédentes, **caractérisé en ce qu'**un gaz plasma froid sous vide à basse pression est utilisé possédant une fréquence d'entre 1 kHz et 5 GHz.

17. Procédé pour appliquer une couche de peinture sur un matériau plastique composite renforcé par des fibres, **caractérisé en ce que** le procédé comprend les étapes de prétraitement du matériau en utilisant un procédé selon une quelconque des revendications précédentes, et ensuite d'application de la couche de peinture sur le matériau prétraité.

18. Procédé selon la revendication 17, **caractérisé en ce que** la couche de peinture comprend au plus 30% en poids de durcisseur.
